# EUROPÄISCHE PATENTSCHRIFT

(11) **EP 0 724 283 B1**
(45) Veröffentlichungstag und Bekanntmachung des Hinweises auf die Patenterteilung: **05.08.1998**
(21) Anmeldenummer: 96200105.3
(22) Anmeldetag: 17.01.1996
(51) Int. Cl.: H01J 35/10

(54) **Drehanoden-Röntgenröhre mit einem Gleitlager**
Rotating anode type X-ray tube with a slide bearing
Tube à rayons X à anode tournante avec palier à glissement

(30) Priorität: 25.01.1995 DE 19502207
(43) Veröffentlichungstag der Anmeldung: 31.07.1996
(73) Patentinhaber: Philips Patentverwaltung GmbH, 22335 Hamburg (DE); Philips Electronics N.V., 5621 BA Eindhoven (NL)
(72) Erfinder: Vetter, Axel, D-22335 Hamburg (DE); Tielemans, Leo P.M., D-22335 Hamburg (DE)
(74) Vertreter: Hartmann, Heinrich, Dipl.-Ing.

(56) Entgegenhaltungen:
- EP-A- 0 265 005
- EP-A- 0 479 195

## Beschreibung

Die Erfindung betrifft eine Drehanoden-Röntgenröhre mit einem der Lagerung der Drehanode dienenden Gleitlager, das einen feststehenden Lagerteil und einen um eine Rotationsachse drehbaren Lagerteil umfaßt, wobei die beiden Lagerteile über ein Schmiermittel zusammen wirken und zur Aufnahme von axialen Lagerkräften zur Rotationsachse senkrechte Lagerflächen aufweisen, die in einen Schmiermittelspalt zwischen den Lagerteilen bildende Mantelflächen übergehen und von denen eine mit einem Rillenmuster versehen ist.

Eine solche Drehanoden-Röntgenröhre ist aus der EP-A- 378 273 (= US-A- 5,068,885) bekannt. Das Rillenmuster setzt sich aus aufeinander zulaufenden Rillen zusammen. Diese Rillen verlaufen nicht geradlinig, sondern entsprechend den Bogenstücken von zwei (logarithmischen) Spiralen mit entgegengesetztem Umlauf sind, weshalb dieses Gleitlager auch als Spiralrillenlager bezeichnet wird. Wenn das Lager mit der vorgeschriebenen Drehrichtung rotiert, bildet sich in den Bereich, in den die Rillenpaare zusammenlaufen, ein Schmiermitteldruck aus, der die Tragfähigkeit des Lagers bestimmt. Der zylinderförmige Schmiermittelspalt zwischen den beiden Axiallagern hat bei dem bekannten Lager Abmessungen (ca. 0,5 mm), die groß sind im Vergleich zum Abstand der Lagerflächen im Bereich des Rillenmusters (typischerweise 0,02 mm), so daß dieser Schmiermittelspalt als Schmiermittelreservoir dient, aus dem Schmiermittel in den Bereich des Rillenmusters transportiert werden kann.

Es hat sich gezeigt, daß unter ungünstigen Betriebsbedingungen nach mehrstündigem Betrieb die Tragfähigkeit des Lagers gegenüber in axialer Richtung wirkenden Lagerkräften nachlassen kann.

Aufgabe der vorliegenden Erfindung ist es, die Tragfähigkeit des Gleitlagers auch nach längerem Betrieb und unter ungünstigen Betriebsbedingungen sicherzustellen. Diese Aufgabe wird gemäß Anspruch 1 bei einer Drehanoden-Röntgenröhre der eingangs genannten Art dadurch gelöst, daß die den Schmiermittelspalt begrenzende Mantelfläche des drehbaren Lagerteils einen zur Rotationsachse symmetrischen Querschnitt aufweist und daß der Querschnitt der den Schmiermittelspalt begrenzenden Mantelfläche des feststehenden Lagerteils zur Rotationsachse unsymmetrisch ist.

Besondere Ausführungsarten der Erfindung sind in den abhängigen Ansprüchen angegeben.

Untersuchungen, die zu der Erfindung geführt haben, haben gezeigt, daß das geschilderte Nachlassen der Tragfähigkeit dann auftreten kann, wenn das Lager über Stunden hinweg bei vertikaler Rotationsachse und hoher Drehzahl (mehr als 3000 Umdrehungen pro Minute) rotiert. Dies ist wie folgt zu erklären:

Durch die Rotation des Spiralrillenlagers wird das Schmiermittel in den Bereich gepumpt, in den die Spiralrillen zusammenlaufen. Bei richtiger Dimensionierung und idealen Randbedingungen des Lagers reicht diese Pumpwirkung aus, um auch bei hoher Drehzahl das Schmiermittel entgegen der Wirkung der Zentrifugalkräfte in den erwähnten Bereich des Rillenmusters zu führen. Im Betrieb eines solchen Lagers sind aber Instabilitäten - ausgelöst beispielsweise durch eine Unwucht der nur einseitig gelagerten Drehanode - unvermeidbar. Diese Unwucht kann bei vertikaler Drehachse dazu führen, daß an einzelnen Punkten des Lagers sich die hydrodynamischen Bedingungen kurzzeitig so ändern, daß minimale Schmiermittelmengen nach außen in den Schmiermittelspalt gelangen. Dabei entsteht in den Außenbereichen der die axialen Kräfte aufnehmenden Lagerflächen ein von Schmiermittel freier Hohlraum. Es ist nicht ohne weiteres möglich, das Schmiermittel entgegen der Wirkung der Fliehkräfte von dem Schmiermittelspalt in den Hohlraum auf den Lagerflächen zu führen.

Obwohl die Fliehkräfte bei horizontaler Lage der Drehachse in gleicher Weise auf das Schmiermittel einwirken, kommt es bei dieser Lage der Rotationsachse nicht zu einem solchen Hohlraum, weil das Schmiermittel aus dem Schmiermittelspalt unter der Wirkung der Schwerkraft wieder in den Bereich des Rillenmusters gelangen kann, was noch unterstützt wird, wenn sich der Schmiermittelspalt an der Oberseite des Gleitlagers infolge des Gewichts der Drehanode um einige µm verengt. Deshalb kann man auch nach stundenlangem Betrieb der Drehanode mit horizontaler Drehachse die Drehanode einige Zeit (ca. eine Stunde) mit vertikaler Drehachse betreiben, ohne daß die Tragfähigkeit merklich nachläßt.

Durch die erfindungsgemäße Ausgestaltung der beiden Lagerteile wird nun erreicht, daß - analog zu einem hydrodynamischen Radial-Gleitlager - der Schmiermitteldruck im Schmiermittelspalt in dem Bereich zunimmt, in dem die Spaltbreite abnimmt. Dadurch wird das Schmiermittel aus diesen Bereich heraus auf die zur Rotationsachse senkrechten Lagerflächen zur Aufnahme der axialen Lagerkräfte gedrückt, wo es wieder auf das Rillenmuster gelangt, und in den tragenden Bereich hineingepumpt wird. Durch den zur Rotationsachse unsymmetrischen Querschnitt des feststehenden Lagerteils bzw. durch den zur Rotationsachse unsymmetrischen Spaltquerschnitt wird somit ständig Schmiermittel aus dem Schmiermittelspalt auf die tragenden Lagerflächen gepumpt. So ergibt sich ein Schmiermittelkreislauf, in dem das Schmiermittel von den Lagerflächen in den Schmiermittelspalt und von diesem wieder auf die Lagerflächen gelangt.

Es sei an dieser Stelle erwähnt, daß aus der EP-A- 265 005 bereits ein Lagersystem mit zwei in axialem Abstand voneinander angeordneten hydrodynamischen Lagern bekannt ist, dessen Lagerflächen mit einem Rillenmuster versehen sind, wobei zwischen den beiden Lagern eine Kammer mit zueinander senkrechten Kammerwänden vorgesehen ist. Die zylinderförmigen Wandteile sind dabei exzentrisch zueinander angeordnet. Dadurch baut sich bei der Rotation des Lagers in dem Schmiermittel ein Druck auf, der das Schmiermittel in die beiden in Achsrichtung gegeneinander versetzten Lager transportiert. Bei dem bekannten Lagersystem geht es darum, die beiden Radiallager möglichst dicht nebeneinander anordnen zu können. Ein Schmiermittelkreislauf ergibt sich dabei nicht, so daß die Kammer ggf. mit Schmiermittel nachgefüllt werden muß. Ein axiale Lagerkräfte aufnehmendes Spiralrillenlager und die damit einhergehenden und durch die Erfindung zu lösenden Probleme sind in dieser Veröffentlichung nicht erwähnt.

Es gibt verschiedene Möglichkeiten, den feststehenden Lagerteil einen zur Rotationsachse unsymmetrischen Querschnitt zu geben. Beispielsweise kann die Mantelfläche kreiszylinderförmig sein und eine in axialer Richtung verlaufende Nase oder Rippe aufweisen. Dann können im Schmiermittelspalt starke Verwirbelungen auftreten, die unnötige Reibungsverluste verursachen. Eine in dieser Hinsicht günstigere Ausgestaltung besteht bei einer bevorzugten Ausgestaltung der Erfindung darin, daß die den Schmiermittelspalt begrenzende Mantelfläche des feststehenden Lagerteils einen kreisförmigen und bezüglich der Rotationsachse exzentrischen Querschnitt aufweist.

In weiterer Ausgestaltung der Erfindung ist vorgesehen, daß die beiden Lagerteile außer einem ersten, die axialen Lagerkräfte aufnehmenden Abschnitt einen zweiten Abschnitt zur Aufnahme von radialen Lagerkräften mit zur Rotationsachse konzentrischen, zylinderförmigen Mantelflächen aufweisen, von denen eine mit einem Rillenmuster versehen ist, daß die Mantelflächen in den beiden Abschnitten des drehbaren Lagerteils zueinander und zur Rotationsachse konzentrisch sind, und daß die Mantelfläche in dem ersten Abschnitt des feststehenden Lagerteils zu der Mantelfläche im zweiten Abschnitt exzentrisch ist. Während also das drehbare Lagerteil in beiden Abschnitten zueinander und zur Rotationsachse konzentrische Zylindermantelflächen aufweist, weist der zweite Lagerteil im zweiten Abschnitt eine zur Rotationsachse konzentrische Zylindermantelfläche und im ersten Abschnitt eine zur Rotationsachse (und zur Zylindermantelfläche im anderen Abschnitt) exzentrische Mantelfläche auf.

Im Innenbereich des für die axialen Lagerkräfte wirksamen Rillenmusters können sich im Laufe des Betriebes oder während des Einfahrens der Röntgenröhre Restgase ansammeln, die das Lager zerstören können, wenn sie an dieser Stelle in größerem Umfang auftreten. Die Restgase werden aus diesem kritischen Bereich bei einer Weiterbildung der Erfindung dadurch abgeführt, daß in dem feststehenden Lagerteil ein Kanal oder ein Kanalsystem vorgesehen ist zur Verbindung des Teils des Schmiermittelspaltes, in dem sich bei Rotation ein niedriger Schmiermitteldruck ergibt, mit dem Innenbereich des für die axialen Lagerkräfte wirksamen Rillenmusters. Durch diese Maßnahme - aber auch durch andere Effekte - können sich die Restgase in diesem Bereich niedrigen Schmiermitteldruckes ansammeln. Diese Restgase können dadurch entfernt werden, daß in dem feststehenden Lagerteil ein Kanal oder ein Kanalsystem vorgesehen ist zur Verbindung des Teils des Schmiermittelspaltes, in dem sich bei Rotation ein niedriger Schmiermitteldruck ergibt, mit dem Vakuumraum der Röntgenröhre. Die so in den Vakuumraum der Röntgenröhre gelangten Restgase können während des Einfahrens der Röntgenröhre durch den Pumpprozeß und im späteren Betrieb durch ein Getter neutralisiert werden können.

In weiterer Ausgestaltung der Erfindung ist vorgesehen, daß in dem feststehenden Lagerteil ein Kanal oder ein Kanalsystem vorgesehen ist zur Verbindung des Teils des Schmiermittelspaltes, in dem sich bei Rotation ein hoher Schmiermitteldruck ergibt, mit dem Innenbereich des für die axialen Lagerkräfte wirksamen Rillenmusters. Dieser Kanal bzw. dieses Kanalsystem erwirkt eine zusätzliche Rückführung des Schmiermittels vom Schmiermittelspalt in die Lagerflächen.

Die Erfindung wird nachstehend anhand der Zeichnungen näher erläutert. Es zeigen
- Fig. 1: eine Drehanoden-Röntgenröhre, bei der die Erfindung anwendbar ist,
- Fig. 2a: ein Rillenmuster zur Aufnahme axialer Lagerkräfte,
- Fig. 2b: einen zur Rotationsachse senkrechten Querschnitt und
- Fig. 3: einen die Rotationsachse enthaltenden Querschnitt eines erfindungsgemäß gestalteten Gleitlagers.

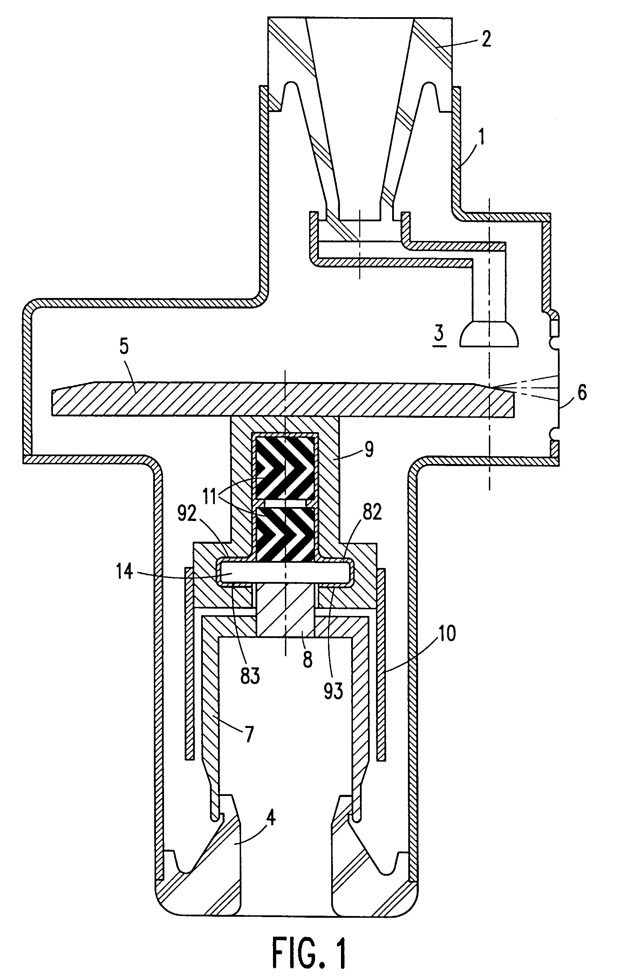

Die in Fig. 1 dargestellte Drehanoden-Röntgenröhre besitzt einen Metallkolben 1, an dem über einen ersten Isolator eine Kathode 3 und über einen zweiten Isolator 4 eine um eine Rotationsachse 15 drehbare Drehanode befestigt ist.

Die Drehanode umfaßt eine Anodenscheibe 5, auf deren der Kathode 3 gegenüberliegenden Fläche beim Einschalten einer Hochspannung Röntgenstrahlung erzeugt wird. Die Röntgenstrahlung kann durch ein Strahlenaustrittsfenster 6 im Kolben austreten, das vorzugsweise aus Beryllium besteht. Die Anodenscheibe 5 ist über eine Lageranordnung mit einem Trägerkörper 7 verbunden, der an den zweiten Isolator 4 befestigt ist. Die Lageranordnung umfaßt einen feststehenden Lagerteil in Form einer fest mit dem Trägerkörper 7 verbundenen Lagerachse 8 und einen drehbaren Lagerteil in Form einer die Lagerachse 8 umschließenden Lagerschale 9, die an ihrem unteren Ende einen Rotor 10 zum Antrieb der am oberen Ende befestigten Anodenscheibe 5 aufweist. Die Lagerachse 8 und die Lagerschale 9 bestehen aus einer Molybdänlegierung (TZM). Stattdessen kann aber auch Molybdän oder eine Wolfram-Molybdän-Legierung verwendet werden.

An ihrem oberen Ende ist die Lagerachse 8 mit zwei in axialer Richtung gegeneinander versetzten, fischgrätartigen Rillenmustern 11 zur Aufnahme radialer Lagerkräfte versehen. Der zylindermantelförmige Spalt zwischen den Rillenmustern 11 und der Lagerschale 9 ist mit einem flüssigen Schmiermittel gefüllt, vorzugsweise einer Galliumlegierung. Die Breite des Spalts entspricht beispielsweise der Tiefe der Rillen und kann in der Praxis zwischen 10 µm und 30 µm liegen. Wenn die Drehanode in der vorgeschrieben Drehrichtung rotiert, wird das Schmiermittel in denjenigen Bereich des Rillenmusters transportiert, in den die Rillen paarweise zusammenlaufen. Hier baut sich in dem Schmiermittel ein Druck auf, der radial auf das Lager wirkende Kräfte aufnehmen kann.

Im Anschluß an den mit den Rillenmustern 11 für die Radiallagerung versehen Bereich hat die Achse 8 einen mehrere mm dicken Abschnitt 14, dessen Durchmesser wesentlich größer ist als der Durchmesser des übrigen Teils der Lagerachse 8. Darunter folgt wiederum ein Abschnitt, dessen Durchmesser zumindest annähernd dem Durchmesser der Lagerachse 8 im oberen Bereich entspricht und der mit dem Trägerkörper 7 verbunden ist. Die Innenkontur der Lagerschale ist dem Abschnitt 14 angepaßt. Die Lagerschale 9 muß in diesem Bereich mehrteilig ausgebildet sein, wobei die Teile so miteinander verbunden werden müssen, daß Schmiermittel nicht austreten kann.

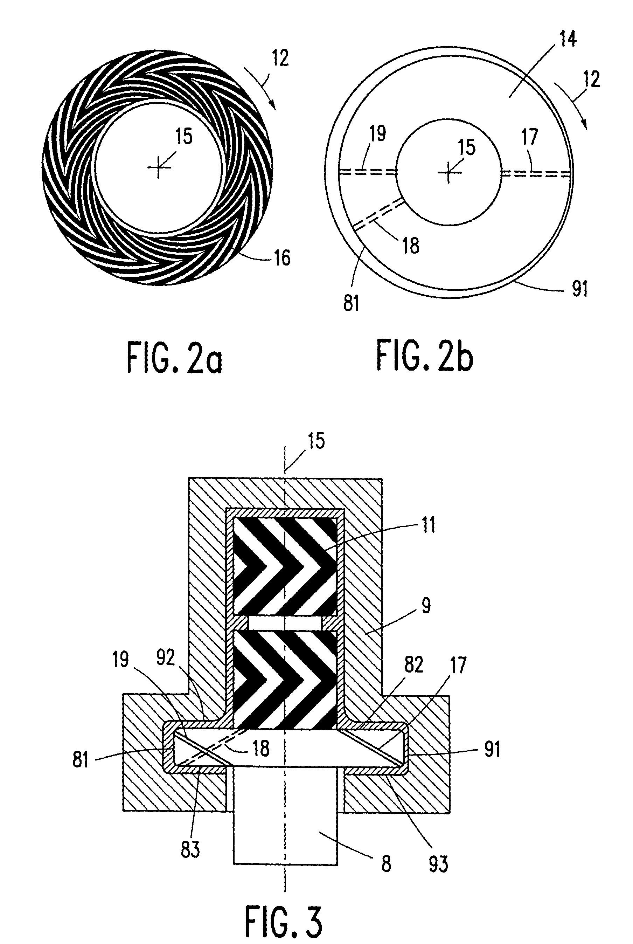

Die freien Stirnflächen 82, 83 auf der Ober- und auf der Unterseite des Abschnittes 14 - oder die ihnen gegenüberliegenden Flächen 92, 93 in der Lagerschale 9 - sind mit Rillenmustern versehen. Diese Rillenmuster wirken werden zusammen mit den gegenüberliegenden Flächen im jeweils anderen Lagerteil als (Spiralrillen-)Lager zur Aufnahme von in axialer Richtung wirkenden Lagerkräften. Fig. 2a zeigt ein solches Rillenmuster 16 in der Draufsicht, wobei der Pfeil 12 die Drehrichtung angibt, in der die Lagerschale rotieren muß, damit dieses Lager trägt (die angegebene Richtung gilt, wenn sich die Rillenmuster auf der Lagerschale 9 befinden. Wenn sich die Rillenmuster hingegen auf der gegenüberliegenden Stirnfläche des Abschnitts 14 der Lagerachse 8 befinden, muß die Drehrichtung umgekehrt sein). Das zur Drehachse 15 konzentrische Rillenmuster setzt sich aus aufeinander zulaufenden Rillen zusammen. Vorzugsweise verlaufen diese Rillen entsprechend den Bogenstücken von zwei (logarithmischen) Spiralen mit entgegengesetztem Umlaufsinn.

Wenn die Drehanode in der vorgeschriebenen Drehrichtung rotiert, wird das Schmiermittel in den Bereich des Rillenmusters gepumpt, in dem die Rillen zusammenlaufen. Hier baut sich in dem Schmiermittel ein Druck auf, der axial auf das Lager wirkende Kräfte aufnehmen kann. Im Prinzip läßt sich ein solches Spiralrillenlager so dimensionieren, daß die Fliehkräfte auf das Schmiermittel kompensiert werden und der Lagerspalt gefüllt bleibt - und zwar auch bei vertikaler Drehachse und hoher Drehzahl. Im praktischen Betrieb können sich jedoch örtlich und zeitlich begrenzte Abweichungen von diesen optimalen Bedingungen ergeben - z.B. infolge von Unwuchten und damit verbundenen geringfügigen Schrägstellungen der Lagerteile relativ zueinander - die dazu führen, daß das Schmiermittel nach außen in den Schmiermittelspalt gelangt, von wo es - bei fortgesetztem Betrieb des Lagers mit vertikaler Drehachse - nicht mehr in den Bereich des Rillenmusters 16 zurückgelangt, von dem es ausgegangen ist.

Erfindungsgemäß ist der Abschnitt 14 des feststehenden Lagerteils 8 so geformt, daß seine zylinderförmige Mantelfläche exzentrisch zur Rotationsachse 15 liegt. Dies ergibt sich aus der Fig. 2b, die schematisch eine Draufsicht auf den Lagerabschnitt 14 darstellt und zusätzlich die Innenkontur der Lagerschale 9 in diesem Bereich andeutet, sowie aus Fig. 3, die die beiden Lagerteile in einem die Rotationsachse 15 enthaltenden Querschnitt darstellt. Die Mantelfläche des Abschnitts 14 der Lagerachse ist dabei mit 81 und die gegenüberliegende Mantelfläche der Lagerschale ist mit 91 bezeichnet. Aus der bezüglich der Rotationsachse 15 konzentrischen Lage der Mantelfläche 91 und der exzentrischen Lage der Mantelfläche 81 ergibt sich, daß sich die Breite des Schmiermittelspalts zwischen den Flächen 81-91 längs des Umfangs stetig ändert.

In dem Bereich, der in Drehrichtung vor der engsten Stelle dieses Spaltes liegt, ergibt sich ein Maximum des Schmiermitteldruckes, während sich in dem gegenüberliegenden Bereich - vor der Stelle mit der größten Spaltbreite - der geringste Schmiermitteldruck und gegebenenfalls ein Hohlraum im Schmiermittel ergibt. In dem Bereich des höchsten Schmiermitteldrucks wird das Schmiermittel in axialer Richtung verdrängt, so daß es zwischen die zur Rotationsachse senkrechten Lagerflächen beiderseits des Abschnitts 14 in den Bereich gelangt, in dem die Pumpwirkung des Rillenmusters 16 wirksam ist. Es entsteht somit insbesondere bei vertikaler Achse und hoher Drehzahl ein Schmiermittelkreislauf von den zur Aufnahme der Lagerflächen 82, 92 bzw. 83, 93 zu dem Schmiermittelspalt und vom Schmiermittelspalt wieder zwischen die Lagerflächen transportiert wird, wobei sich ein Gleichgewicht zwischen Schmiermittelzufluß und Schmiermittelabfluß einstellt.

Es sei darauf hingewiesen, daß die Figuren 2 und 3 die Verhältnisse insbesondere im Schmiermittelbereich nicht maßstabsgerecht darstellen. Der Abstand zwischen den Rillenmustern 11 und 16 und den gegenüberliegenden Lagerflächen liegt in der Praxis zwischen 10 und 30 µm, während der Abstand zwischen den Mantelflächen 81 und 91 an der engsten Stelle ca. 0,1 mm und an der weitesten Stelle 0,9 mm beträgt. Deshalb ist die Schmiermittelmenge im Schmiermittelspalt deutlich größer als im Bereich der Rillenmuster 11 und 16, so daß der Schmiermittelspalt als Reservoir für das Schmiermittel dienen kann.

Wenn Schmiermittel aus dem Lager ausgetreten ist - im allgemeinen aus dem Bereich der unteren Lagerflächen 82, 93 - wird durch die Exzentrizität des Spaltes zwischen den Flächen 81 und 91 Schmiermittel in den Bereich der Lagerflächen überführt. Zusätzlich kann ein Kanal 17 vorgesehen sein, der an der Stelle höchsten Schmiermitteldruckes den unteren Teil des Schmiermittelspaltes mit der Innenseite der oberen Stirnfläche des Abschnitts 14 verbindet. Der Schmiermittelkanal sollte einen so kleinen Durchmesser haben, daß sich eine Kapillarwirkung ergibt, so daß das Schmiermittel nicht ohne weiteres durch den Kanal ausfließen kann.

Beim Befüllen des Lagers mit dem Schmiermittel im Zuge des Herstellungsprozesses, aber auch noch im normalen Betrieb des Lagers können sich die im Schmiermittel enthaltenen Restgase in den Bereichen des niedrigsten Schmiermitteldruckes ansammeln, z.B. im Übergangsbereich zwischen dem oberen Axiallager (82, 92) und dem unteren Radiallager. Geschieht dies in größerem Umfang, können sich Beschädigungen der Lagerflächen ergeben. Diese lassen sich durch einen Kanal 18 verhindern, der diesen Bereich des Lagers mit dem Teil des Schmiermittelspaltes verbindet, in dem sich bei Rotation der Anodenscheibe der niedrigste Schmiermitteldruck ergibt.

Dadurch können die Restgase in den Schmiermittelspalt gelangen. Um sie von dort ganz aus dem Schmiermittel zu entfernen, ist ein weiterer Kanal 19 vorgesehen, der den Schmiermittelspalt an seinem oberen Ende mit dem vom Schmiermittel freien Bereich um das untere Ende der Lagerachse - d.h. mit dem Vakuumraum der Röntgenröhre verbindet. Die auf diese Weise in die Röntgenröhre austretenden Restgase werden im Herstellungsprozeß mittels einer Vakuumpumpe beseitigt. Wenn sie im späteren Betrieb der Röntgenröhre auftreten, werden sie durch die Wirkung des in der Röntgenröhre vorgesehen Getters unschädlich gemacht.

Die Erfindung ist nicht auf das beschriebene Ausführungsbeispiel beschränkt. Beispielsweise könnte die Lagerschale 9 anstatt mit der Anodenscheibe 5 mit dem Röhrenkolben 1 und die Lagerachse 8 anstatt mit dem Röhrenkolben 1 fest mit der Anodenscheibe 5 verbunden sein. In diesem Fall würde die Lagerschale 9 feststehen und die Lagerachse 8 rotieren. Dann müßte die Mantelfläche 91 exzentrisch und die Mantelfläche 81 konzentrisch zur Rotationsachse 15 angeordnet sein. Die Kanäle 17 .. 19 müssen dabei in der feststehenden Lagerschale verlaufen. Eine Verbindung der aus Fig. 3 ersichtlichen Punkte innerhalb und außerhalb des Schmiermittelbereichs ist aber durch einen geradlinigen Kanal in der Lagerschale nicht möglich. Deshalb müßte in der Lagerschale anstelle eines einzigen Kanals ein aus mehreren, einander schneidenden Kanälen bestehendes Kanalsystem vorgesehen sein.

## Patentansprüche

1. Drehanoden-Röntgenröhre mit einem der Lagerung der Drehanode dienenden Gleitlager, das einen feststehenden Lagerteil (8) und einen um eine Rotationsachse (15) drehbaren Lagerteil (9) umfaßt, wobei die beiden Lagerteile über ein Schmiermittel zusammenwirken und zur Aufnahme von axialen Lagerkräften zur Rotationsachse senkrechte Lagerflächen (82,92; 83,93) aufweisen, die in einen Schmiermittelspalt zwischen den Lagerteilen bildende Mantelflächen (81,91) übergehen und von denen eine mit einem Rillenmuster (16) versehen ist,
dadurch gekennzeichnet, daß die den Schmiermittelspalt begrenzende Mantelfläche des drehbaren Lagerteils (9) einen zur Rotationsachse (15) symmetrischen Querschnitt aufweist und daß der Querschnitt der den Schmiermittelspalt begrenzenden Mantelfläche (81) des feststehenden Lagerteils (8) zur Rotationsachse (15) unsymmetrisch ist.

2. Drehanoden-Röntgenröhre nach Anspruch 1,
dadurch gekennzeichnet, daß die den Schmiermittelspalt begrenzende Mantelfläche (81) des feststehenden Lagerteils (8) einen kreisförmigen und bezüglich der Rotationsachse (15) exzentrischen Querschnitt aufweist.

3. Drehanoden-Röntgenröhre nach einem der vorhergehenden Ansprüche ,
dadurch gekennzeichnet, daß die beiden Lagerteile außer einem ersten, die axialen Lagerkräfte aufnehmenden Abschnitt einen zweiten Abschnitt zur Aufnahme von radialen Lagerkräften mit zur Rotationsachse konzentrischen, zylinderförmigen Mantelflächen aufweisen, von denen eine mit einem Rillenmuster (11) versehen ist, daß die Mantelflächen in den beiden Abschnitten des drehbaren Lagerteils (8) zueinander und zur Rotationsachse konzentrisch sind, und daß die Mantelfläche (81) in dem ersten Abschnitt des feststehenden Lagerteils zu der Mantelfläche im zweiten Abschnitt exzentrisch ist.

4. Drehanoden-Röntgenröhre nach einem der vorhergehenden Ansprüche,
dadurch gekennzeichnet, daß in dem feststehenden Lagerteil (8) ein Kanal (18) oder ein Kanalsystem vorgesehen ist zur Verbindung des Teils des Schmiermittelspaltes, in dem sich bei Rotation ein niedriger Schmiermitteldruck ergibt, mit dem Innenbereich des für die axialen Lagerkräfte wirksamen Rillenmusters (16).

5. Drehanoden-Röntgenröhre nach einem der vorhergehenden Ansprüche,
dadurch gekennzeichnet, daß in dem feststehenden Lagerteil (8) ein Kanal (19) oder ein Kanalsystem vorgesehen ist zur Verbindung des Teils des Schmiermittelspaltes, in dem sich bei Rotation ein niedriger Schmiermitteldruck ergibt, mit dem Vakuumraum der Röntgenröhre.

6. Drehanoden-Röntgenröhre nach einem der vorhergehenden Ansprüche,
dadurch gekennzeichnet, daß in dem feststehenden Lagerteil (8) ein Kanal (17) oder ein Kanalsystem vorgesehen ist zur Verbindung des Teils des Schmiermittelspaltes, in dem sich bei Rotation ein hoher Schmiermitteldruck ergibt, mit dem Innenbereich des für die axialen Lagerkräfte wirksamen Rillenmusters (16).

## Claims

1. A rotary-anode X-ray tube, comprising a sleeve bearing which serves to journal the rotary anode and comprises a stationary bearing portion (8) and a bearing portion (9) which is rotatable about an axis of rotation (15), the two bearing portions cooperating with one another via a lubricant and comprising bearing surfaces (82, 92; 83, 93) which extend perpendicularly to the axis of rotation in order to take up axial bearing forces, said bearing surfaces changing over into external surfaces (81, 91) which form a lubricant gap between the bearing portions and one of which is provided with a groove pattern (16),
characterized in that the external surface of the rotatable bearing portion (9) which bounds the lubricant gap has a symmetrical cross-section relative to the axis of rotation (15), and that the cross-section of the external surface (81) of the stationary bearing portion (8) which bounds the lubricant gap is non-symmetrical relative to the axis of rotation (15).

2. A rotary-anode X-ray tube as claimed in Claim 1, characterized in that the external surface (81) of the stationary bearing portion (8) which bounds the lubricant gap has a circular cross-section which is eccentric with respect to the axis of rotation (15).

3. A rotary-anode X-ray tube as claimed in one of the preceding Claims,
characterized in that both bearing portions comprise, in addition to a first section which takes up the axial bearing forces, a second section for taking up radial bearing forces, which second section has cylindrical external surfaces which are concentric with the axis of rotation, one of said external surfaces being provided with a groove pattern (11), that the external surfaces of the two sections of the rotatable bearing portion (8) are concentric with one another as well as with the axis of rotation, and that the external surface (81) of the first section of the stationary bearing portion is eccentric with respect to the external surface of the second section.

4. A rotary-anode X-ray tube as claimed in one of the preceding Claims,
characterized in that the stationary bearing portion (8) is provided with a duct (18), or with a system of ducts, for connecting the part of the lubricant gap in which a low lubricant pressure occurs during rotation to the inner part of the groove pattern (16) which is active for the axial bearing forces.

5. A rotary-anode X-ray tube as claimed in one of the preceding Claims,
characterized in that the stationary bearing portion (8) is provided with a duct (19), or with a system of ducts, for connecting the part of the lubricant gap in which a low lubricant pressure occurs during rotation to the vacuum space of the X-ray tube.

6. A rotary-anode X-ray tube as claimed in one of the preceding Claims,
characterized in that the stationary bearing portion (8) is provided with a duct (17), or with a system of ducts, for connecting the part of the lubricant gap in which a high lubricant pressure occurs during rotation to the inner part of the groove pattern (16) which is active for the axial bearing forces.

## Revendications

1. Tube à rayons X à anode tournante avec un palier à glissement servant au logement de l'anode tournante qui comprend une pièce de palier fixe (8) et une pièce de palier (9) rotative tournant autour d'un axe de rotation (15), les deux pièces de palier coopérant par l'intermédiaire d'un lubrifiant et présentant des surfaces de palier (82,92; 83,93) perpendiculaires à l'axe de rotation pour absorber les forces de palier axiales, lesdites surfaces se prolongeant en une fente à lubrifiant entre les surfaces périphériques (81,91) formant les pièces de palier et l'une d'elles étant dotée d'une structure rainurée (16)
caractérisé en ce que la surface périphérique de la pièce de palier rotative (9) délimitant la fente à lubrifiant présente une section symétrique par rapport à l'axe de rotation (15) et que la section de la surface périphérique (81) de la pièce de palier fixe (8) délimitant la fente à lubrifiant est asymétrique par rapport à l'axe de rotation (15).

2. Tube à rayons X à anode tournante selon la revendication 1,
caractérisé en ce que la surface périphérique (81) de la pièce de palier fixe (8) délimitant la fente à lubrifiant présente une section circulaire et excentrique par rapport à l'axe de rotation (15).

3. Tube à rayons X à anode tournante selon l'une des revendications précédentes,
caractérisé en ce que les deux pièces de palier présentent, en dehors d'une première section absorbant les forces de palier axiales, une deuxième section en vue d'absorber les forces de palier radiales avec des surfaces périphériques cylindriques concentriques par rapport à l'axe de rotation dont l'une est dotée d'une structure rainurée (11), que les surfaces périphériques sont concentriques l'une par rapport à l'autre et par rapport à l'axe de rotation dans les deux sections de la pièce de palier rotative (8) et que la surface périphérique (81) est excentrique dans la première section de la pièce de palier fixe par rapport à la surface périphérique dans la deuxième section.

4. Tube à rayons X à anode tournante selon l'une des revendications précédentes,
caractérisé en ce qu'un canal (18) ou un système de canaux est prévu dans la pièce de palier fixe (8) en vue de la liaison de la partie de la fente à lubrifiant dans laquelle se forme en cas de rotation une faible pression de lubrifiant avec la zone interne de la structure rainurée (16) active pour les forces de palier axiales.

5. Tube à rayons X à anode tournante selon l'une des revendications précédentes,
caractérisé en ce que, dans la pièce de palier fixe (8), il est prévu un canal (19) ou un système de canaux en vue de la liaison de la partie de la fente à lubrifiant dans laquelle se forme en cas de rotation une faible pression de lubrifiant avec l'espace sous vide du tube à rayons X.

6. Tube à rayons X à anode tournante selon l'une des revendications précédentes,
caractérisé en ce que, dans la pièce de palier fixe (8), il est prévu un canal (17) ou un système de canaux en vue de la liaison de la partie de la fente à lubrifiant dans laquelle se forme en cas de rotation une pression élevée du lubrifiant avec la zone interne de la structure rainurée (16) actif pour les forces de palier axiales.
